(19) Europäisches Patentamt
European Patent Office
Office européen des brevets

(11) **EP 3 625 443 B1**

(12) **FASCICULE DE BREVET EUROPEEN**

(45) Date de publication et mention de la délivrance du brevet:
**13.01.2021   Bulletin 2021/02**

(21) Numéro de dépôt: **18719963.3**

(22) Date de dépôt: **11.04.2018**

(51) Int Cl.:
*F01N 9/00* *(2006.01)*       *F01N 3/10* *(2006.01)*

(86) Numéro de dépôt international:
**PCT/FR2018/050906**

(87) Numéro de publication internationale:
**WO 2018/211186 (22.11.2018 Gazette 2018/47)**

(54) **PROCÉDÉ DE DÉTERMINATION DU PASSAGE À L'ÉTAT SANS PRÉSENCE D'EAU LIQUIDE DANS UNE LIGNE D'ÉCHAPPEMENT**

VERFAHREN ZUR BESTIMMUNG DES ÜBERGANGS IN DEN ZUSTAND OHNE FLÜSSIGES WASSER IN EINER ABGASLEITUNG

METHOD FOR DETERMINING THE TRANSITION TO THE ZERO LIQUID WATER STATE IN AN EXHAUST LINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité:  **17.05.2017   FR 1754344**

(43) Date de publication de la demande:
**25.03.2020   Bulletin 2020/13**

(73) Titulaire: **PSA Automobiles SA**
**78300 Poissy (FR)**

(72) Inventeurs:
• **DAMBRICOURT, Frederic**
**78600 Maisons Laffitte (FR)**
• **FONTAINE, Nicolas**
**95800 Cergy (FR)**
• **LIENNARD, Frederic**
**78500 Sartrouville (FR)**

(56) Documents cités:
DE-A1-102011 084 041     DE-A1-102015 202 870
FR-A1- 3 034 455

**Description**

La présente invention se rapporte au domaine des moteurs à combustion interne. L'invention concerne plus particulièrement la détermination du moment où il n'y a plus d'eau liquide dans la ligne d'échappement.

Les véhicules automobiles, équipés d'un moteur à combustion interne, sont pourvus de dispositifs de dépollution des gaz d'échappement.

On a constaté, au cours des années, un durcissement des normes anti-pollution auxquelles sont soumis tous les nouveaux véhicules. Dès lors, les dispositifs de dépollution des véhicules sont devenus plus sophistiqués, générant des problèmes de fiabilité, et donc des pannes, et engendrant des frais d'entretien importants pour les propriétaires des véhicules.

A l'exemple du document FR3034455, ces dispositifs de dépollution peuvent comprendre une sonde par exemple pour mesurer le taux de d'oxyde d'azote d'oxygène. Ces sondes sont des composants fragiles qui, pour fournir une mesure précise, ont besoin d'être chauffé à une température de fonctionnement (aux alentours de 800°C) et il convient de la protéger de certains éléments, notamment de l'eau sous forme liquide. La combustion, dans le moteur, d'un mélange air/carburant, provoque la création de vapeurs d'eau qui, en se refroidissant, se condense et forme de l'eau dans la ligne d'échappement.

L'eau ainsi générée est expulsée de la ligne d'échappement par les gaz d'échappement et peut, sur son parcours, entrer en contact avec la sonde. Lorsque la sonde est chauffée à 800°C, le contact local de l'eau avec la sonde provoque un choc thermique par refroidissement local de la sonde et, par conséquent, une dégradation de la sonde, voire une casse de celle-ci. Il en résulte une mise en défaut du dispositif de dépollution. Ces sondes doivent donc être amenées à leur température de fonctionnement après évaporation de toute eau sous forme liquide dans la ligne d'échappement.

Pour prévenir ce risque de casse, il est connu du document FR3034455 de différer le temps de chauffe de la sonde en fonction du nombre de démarrage antérieurs du moteur. Cependant une telle méthode requiert la calibration de coefficients de retard du temps de chauffe qui peuvent de pas être adapté en situation de vie réelle, notamment lors d'arrêt et de redémarrage avec une ligne d'échappement pas suffisamment chaude pour évaporer toute l'eau produite par la combustion.

On connait encore le document DE102011084041A1, qui présente un procédé de détermination du passage à l'état sans eau liquide, dans une ligne d'échappement de moteur à combustion interne dans lequel on détermine l'énergie calorifique en cours dans la ligne d'échappement, cependant cette méthode est imparfaite pour déterminer correctement le passage à l'état sans eau liquide.

Il existe donc un besoin pour améliorer la détermination du moment où il n'y a plus d'eau liquide dans la ligne d'échappement.

Pour cela, il est prévu selon l'invention un procédé de détermination du passage à l'état sans présence d'eau liquide, dit point de rosée, dans une ligne d'échappement de moteur à combustion interne, caractérisé en ce que l'on :

- Détermine l'énergie calorifique) en cours dans la ligne d'échappement,
- Détermine le nombre d'arrêt moteur successifs antérieurs sans passage de point de rosée,
- Détermine le seuil d'énergie calorifique requis corrigé en fonction de ce nombre d'arrêt moteur successifs antérieurs pour être assuré de ne pas avoir d'eau liquide dans la ligne d'échappement,
- Compare l'énergie calorifique actuelle au seuil d'énergie calorifique corrigé et on considère que le point de rosée est passé si l'énergie calorifique en cours est supérieure au seuil d'énergie calorifique corrigé.

L'effet technique de la combinaison du modèle énergétique et de la prise en compte des arrêts antérieurs sans passage de point de rosée permet une évaluation plus juste de la situation de passage ou non du point de rosée, ce qui évite à devoir prévoir des coefficients de retard du temps de chauffe.

Diverses caractéristiques supplémentaires peuvent être prévues, seules ou en combinaisons :
Dans un mode de réalisation où la ligne d'échappement comprend un organe de dépollution et une sonde, l'énergie calorifique en cours dans la ligne d'échappement est définie en intégrant la puissance calorifique apportée dans la ligne d'échappement et déterminée par la relation suivante :

$$Pcal= K.Qéch.Cgaz/paroi. Cp.(Tgps – Tp)$$

Avec Pcal la puissance calorifique, Tgps la température de paroi de la ligne d'échappement, Tp la température des gaz d'échappement environnant la sonde, Cp la capacité calorifique des gaz d'échappement, Cgaz/paroi un coefficient de pondération prenant en compte les échanges thermiques entre les gaz et la paroi de ligne d'échappement, Qech le débit de gaz d'échappement, K un coefficient de pondération dépendant de l'état de chauffe de l'organe de dépollution et de la température du moteur.

Dans un mode de réalisation, la détermination du seuil d'énergie calorifique corrigé comprend :

- une étape de détermination d'une énergie seuil nominale requise pour que la ligne d'échappement de contienne pas d'eau liquide, en fonction de la température d'air ambiant de la température du moteur,
- une étape de détermination, à partir du nombre d'arrêt moteur successifs antérieurs sans passage de point de rosée, d'un facteur de correction dont le produit avec l'énergie seuil nominale permet d'obtenir, le seuil d'énergie calorifique corrigé.

Dans un mode de réalisation, le procédé étant mis en œuvre par un calculateur, le nombre d'arrêt moteur successifs antérieurs sans passage de point de rosée comprend une étape de comptage du nombre d'arrêt moteur successifs antérieurs sans passage de point de rosée pendant la phase d'éveil en cours du calculateur.

Dans un mode de réalisation, la température d'air ambiant et la température du moteur sont déterminés au début de la phase d'éveil en cours du calculateur.

Dans un mode de réalisation, le procédé comprend :

- une étape, à l'arrêt du calculateur, d'écriture dans une mémoire non volatile du nombre d'arrêt moteur successifs antérieurs sans passage de point de rosée,
- une étape de lecture, au début de la phase d'éveil du calculateur, de cette mémoire non volatile,
- une addition du nombre d'arrêt moteur successifs antérieurs sans passage de point de rosée compté pendant la phase d'éveil du calculateur en cours à la valeur de cette mémoire non volatile, tant que le point de rosée n'est pas passé.

Dans un mode de réalisation, le comptage du nombre d'arrêt moteur successifs antérieurs sans passage de point de rosée pendant la phase d'éveil du calculateur en cours est remis à zéro lorsque le point de rosée est passé.

L'invention concerne aussi un calculateur, caractérisé en ce qu'il comprend les moyens d'acquisition, de traitement par instructions logicielles stockées dans une mémoire ainsi que les moyens de commande requis à mise en œuvre du procédé selon l'une quelconque des variantes précédemment décrites.

L'invention concerne aussi un ensemble moteur comprenant un moteur à combustion interne relié à une ligne d'échappement, cette ligne d'échappement comportant un organe de dépollution et une sonde de mesure ayant besoin d'être chauffé à une température de fonctionnement, caractérisé en ce qu'il comprend un tel calculateur.

L'invention concerne aussi un véhicule automobile, caractérisé en ce qu'il comprend un tel ensemble moteur pour son déplacement.

D'autres particularités et avantages apparaîtront à la lecture de la description ci-après d'un mode particulier de réalisation, non limitatif de l'invention, faite en référence aux figures dans lesquelles :

- La figure 1 est une représentation schématique d'un moteur à combustion interne équipé d'une ligne d'échappement permettant la dépollution des gaz d'échappement en sortie du moteur.
- La figure 2 est une représentation schématique de la procédure de calcul de l'énergie calorifique actuelle dans la ligne d'échappement.
- La figure 3 est une représentation schématique de la procédure de détermination du nombre d'arrêt moteur sans passage du point de rosée.

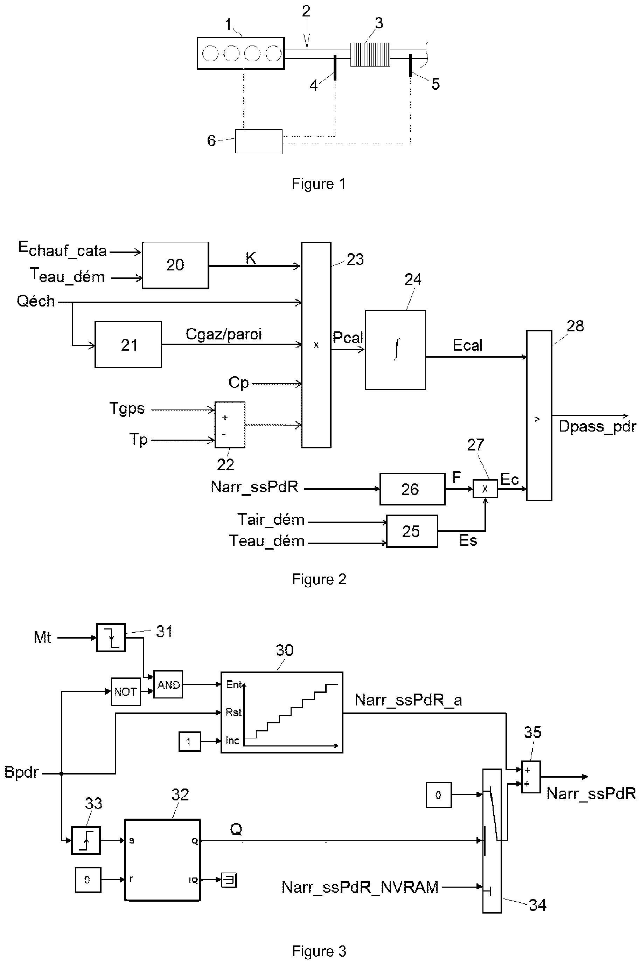

La figure 1 présente un moteur 1 à combustion interne, par exemple un moteur à allumage commandé, fonctionnant par exemple à l'essence. Ce moteur 1 est relié à une ligne 2 d'échappement des gaz brûlés pour former un ensemble moteur. Un tel ensemble moteur peut équiper un véhicule automobile pour son déplacement.

La ligne d'échappement 2 dispose d'un catalyseur 3 d'oxydoréduction trois voies, pour la réduction des oxydes d'azote, l'oxydation du monoxyde de carbone et l'oxydation des hydrocarbures imbrûlés. La ligne d'échappement dispose encore d'une première sonde à oxygène 4 en amont du catalyseur 3 et une seconde sonde à oxygène 5 en aval du catalyseur 3. L'amont et l'aval sont ici définis relativement au sens d'écoulement des gaz d'échappement dans la ligne 2 d'échappement.

Les sondes à oxygène sont reliées à un calculateur 6. Ce calculateur 6 comprenant les moyens d'acquisition, de traitement par instructions logicielles stockées dans une mémoire ainsi que les moyens de commande requis à mise en œuvre du procédé de l'invention détaillé après.

Comme déjà expliqué, afin d'obtenir une mesure précise des sondes à oxygène, ces dernières doivent être amenées à leur température de fonctionnement optimale. Cependant, cette montée en température doit être faite après évaporation de toute eau sous forme liquide dans la ligne d'échappement, pouvant entraîner une casse de l'élément sensible des sondes en cas de contact avec l'eau (choc thermique).

La détermination du passage de ce moment où il n'y a plus d'eau liquide dans la ligne d'échappement, appelé encore passage du point de rosée, PdR, est faite par calcul, en déterminant au préalable la quantité d'énergie qu'il faut pour évaporer toute l'eau et en calculant d'énergie actuellement emmagasinée dans la ligne d'échappement 2, en fonction de conditions extérieures.

L'énergie actuelle, Ecal, emmagasinée dans la ligne d'échappement 2 est déterminée en intégrant la puissance calorifique, Pcal, envoyée par les gaz de combustion produits par le moteur 1 dans la ligne d'échappement 2 via les gaz d'échappement. L'intégration de la puissance calorifique envoyée par le moteur 1 s'effectue à partir de la mise en route du calculateur 6.

En référence à la figure 2, le calcul de l'énergie calorifique actuelle dans la ligne d'échappement 2 comprend les étapes suivantes :

- Une étape de détermination de l'état de la chauffe du catalyseur 3, Echauf_cata, et de la température du moteur par exemple par celle du liquide de refroidissement, Teau_dém, au démarrage du moteur 1. Plus précisément le tout premier démarrage à la mise en route du calculateur 6.

A partir de ces deux paramètres, on détermine au bloc 20 un coefficient de pondération K. Ce bloc 20 peut être une cartographie mémorisée qui établit le coefficient de pondération K en fonction de l'état de la chauffe du catalyseur 3, Echauf_cata, et de la température de liquide de refroidissement, Teau_dém. L'état de la chauffe du catalyseur 3 peut être défini par plusieurs niveaux de chauffe, par exemple quatre niveaux.

En effet, plus le catalyseur 3 est intensément chauffé, plus l'énergie apportée à la ligne est plus importante et le point de rosée est passé plus rapidement. De même, plus la température de liquide de refroidissement au démarrage est élevée, plus le point de rosée est passé rapidement.

- Une étape de détermination du débit de gaz d'échappement, Qech.

A partir de ce débit de gaz d'échappement, Qech on détermine au bloc 21, par exemple par une cartographie, également un coefficient de pondération, $C_{gaz/paroi}$, pour prendre en compte les échanges gaz / paroi. En effet, plus les gaz se déplacent vite, moins les échanges thermiques avec la paroi se font.

- Une étape de détermination, par exemple par estimation, de la température de paroi, Tp, de la ligne d'échappement,
- Une étape de détermination, par mesure ou estimation, de la température des gaz d'échappement dans l'environnement proche de la sonde, Tgps.

A partir de ces deux températures, on détermine au bloc 22 leur écart. Au bloc 23 on détermine ensuite la puissance calorifique envoyée à l'échappement en effectuant le produit suivant :

$$Pcal= K.Q_{éch}.C_{gaz/paroi}. Cp.(Tgps - Tp)$$

Cette puissance calorifique, Pcal, est ensuite intégrée au bloc 24 pour déterminer l'énergie calorique, Ecal, autrement dit la quantité de chaleur, passée à l'échappement. En pratique, cette intégration s'effectue en additionnant l'énergie calorifique Ecal déterminée à chaque pas de calcul, cette énergie calorifique déterminée à chaque pas de calcul étant égale au produit de la puissance Pcal par la durée du pas de calcul.

Toujours en référence à la figure 2, l'énergie qu'il faut pour passer le point de rosée, autrement dit que la ligne d'échappement ne contienne pas d'eau liquide, dépend de la température extérieure, de la température du moteur, ce qui permet de déterminer une l'énergie seuil à atteindre pour passer le point de rosée. L'énergie qu'il faut pour passer le point de rosée dépend aussi de la quantité d'eau présente dans la ligne. Cette dernière est obtenue implicitement en corrigeant l'énergie seuil à atteindre pour passer le point de rosée via un facteur dépendant du nombre d'arrêt moteur sans avoir passé le point de rosée. En effet, les gaz d'échappement contiennent de l'eau, issu de la combustion, qui se retrouve dans la ligne d'échappement. Si cette dernière n'est pas suffisamment chaude, l'eau s'y condense et vient se rajouter à l'eau qui y est déjà présente. Si l'on réalise un ou plusieurs arrêts sans passer le point de rosée, en raison d'une ligne d'échappement pas suffisamment chaude, au redémarrage suivant, il faudra donc apporter plus d'énergie pour faire évaporer une quantité d'eau plus importante.

Ainsi la procédure comprend en outre :

- Une étape de détermination de la température d'air extérieur, au démarrage, Tair_dém, Plus précisément au tout premier démarrage du moteur à la mise en route du calculateur 6.

- Une étape de détermination de la température du liquide de refroidissement du moteur, Teau_dém, au démarrage. Plus précisément le tout premier démarrage à la mise en route du calculateur 6.

A partir de ces deux températures, on détermine au bloc 25, l'énergie seuil nominale, Es, requise pour que la ligne d'échappement de contienne pas d'eau liquide. Cette l'énergie seuil nominale, Es, peut être déterminée par une cartographie mémorisée qui renvoit en fonction des deux températures, Tair_dém et Teau_dém, la valeur de l'énergie seuil nominale, Es.

La procédure comprend encore une étape de détermination du nombre d'arrêt successifs antérieurs du moteur 1 sans passage du point de rosée, Narr_ssPdR, afin de prendre en compte la présence d'eau liquide dans la ligne d'échappement 2 des arrêts précédents.

A partir de ce nombre d'arrêt successifs sans passage du point de rosée, Narr ssPdR, on détermine ensuite au bloc 26 un facteur de correction, F, dont le produit au bloc 27 avec l'énergie seuil, Es, déterminée au bloc 25, permet d'obtenir, le seuil d'énergie corrigé, Ec, requis pour être assuré de passer le point de rosée, autrement dit de ne pas avoir d'eau liquide dans la ligne d'échappement.

Au bloc 28, on effectue la comparaison entre l'énergie calorifique, Ecal, et le seuil d'énergie corrigé, Ec, et si l'énergie calorifique, Ecal, est supérieur au seuil d'énergie corrigé, Ec, alors on considère que le point de rosée est passé (Dpass_pdr sur la figure 2).

La figure 3 présente plus en détail la procédure de détermination du nombre d'arrêt successifs antérieurs sans passage du point de rosée, Narr_ssPdR.

Sur cette figure 3, le bloc 30 désigne un compteur de nombre d'arrêt sans passage du point de rosée pour le roulage en cours. Par roulage en cours on entend la phase de fonctionnement du moteur 1 pour la phase d'éveil du calculateur 6 en cours. En effet on peut avoir la situation dans laquelle le moteur est à l'arrêt, c'est-à-dire non tournant et que le calculateur 6 soit en éveil, il s'agit par exemple d'un arrêt automatique dans le cas d'une fonction d'arrêt et de redémarrage automatique, ou la situation dans laquelle le moteur est à l'arrêt, c'est-à-dire non tournant et que le calculateur 6 soit éteint, dans le cas d'un arrêt complet du moteur pendant par exemple un stationnement. Autrement dit, on compte les arrêts successifs du moteur (état non tournant) pendant la phase d'éveil du calculateur 6 en cours. Ce compteur s'incrémente de 1 (entrée Inc du bloc 30) lorsqu'un arrêt moteur est détecté.

La détection de l'arrêt moteur s'effectue ainsi :

- On scrute une variable, Mt, qui indique par son état si le moteur est tournant ou non tournant, et au bloc 31 on détecte une transition de l'état moteur tournant vers l'état moteur non tournant. La variable, Mt, est par exemple booléen qui vaut 0 lorsque le moteur est non tournant et 1 dans le cas contraire.
- On scrute une variable, Bpdr, qui indique par son état si le point de rosée est actuellement passé ou non. La variable, Bpdr est par exemple booléen qui vaut 0 lorsque le point de rosée n'est pas passé et 1 dans le cas contraire.

Si la variable, Bpdr, indique que le point de rosée est actuellement passé alors le compteur du bloc 30 est remis à zéro (entrée Rst du bloc 30)

Si la variable, Bpdr, indique que le point de rosée n'est actuellement pas passé et qu'une transition de l'état moteur tournant vers l'état moteur non tournant est détectée par le bloc 31, alors le compteur incrémente le nombre d'arrêt sans passage de point de rosée, Narr_ssPdR_a. Ce compteur incrémente le nombre d'arrêt du moteur sans passage de point de rosée tant que le calculateur est alimenté et perd son contenu lorsque le calculateur est éteint. Ce compteur incrémente donc le nombre d'arrêt du moteur sans passage de point de rosée d'une phase de fonctionnement du moteur qui peut être pendant cette phase tournant ou non tournant mais pendant laquelle le calculateur reste alimenté.

Sur la figure 33 encore, au bloc 33 on détecte si une transition de la variable Bpdr de l'état point de rosée non passé à l'état passé a lieu.

Tant qu'au bloc 33 une telle transition n'a pas été détectée, on prend en compte un nombre d'arrêt sans passage de point de rosée sauvegardé en mémoire non volatile, Narr_ssPdR_NVRAM. En effet, il est prévu en cas d'arrêt moteur avec en plus un arrêt du calculateur 6, de sauvegarder le nombre d'arrêts sans passage de point de rosée, Narr_ssPdr, en mémoire non volatile lors de l'endormissement du calculateur 6, afin de ne pas perdre cette valeur à l'extinction du calculateur et de pouvoir ainsi en tenir compte pour corriger le modèle énergétique pendant la phase d'éveil suivante.

Toujours dans ce cas où au bloc 33 une telle transition n'a pas été détectée, le bloc 32, qui est une bascule RS, prend en sortie Q la valeur qui place la bascule (bloc 34) de sorte à lire la valeur du le nombre d'arrêt sans passage de point de rosée sauvegardé en mémoire non volatile, Narr_ssPdr_NVRAM.

Dès qu'au bloc 33 on détecte qu'une transition de la variable Bpdr de l'état point de rosée non passé à l'état passé a lieu, on ne prend plus en compte le nombre d'arrêt sans passage de point de rosée sauvegardé en mémoire non volatile, et ce jusqu'à la prochaine coupure du calculateur 6, pour ne pas cumuler cette valeur à chaque pas de calcul.

Dans ce cas, le bloc 32, prend en sortie Q la valeur qui place la bascule (bloc 34) sur la valeur 0.

La valeur de sortie du bloc 34 est ensuite additionnée au bloc 35 avec le nombre d'arrêt sans passage de point de rosée, Narr_ssPdR_a, issu du compteur 30, pour former le nombre sans passage de point de rosée, Narr_ssPdR utilisé dans la suite la procédure décrite en figure 2.

Ce nombre d'arrêt sans passage de point de rosée sauvegardé en mémoire non volatile est lu en mémoire uniquement lors du réveil du calculateur 6 afin d'éviter de prendre ne compte un éventuel écrasement de sa valeur en cours de roulage.

L'invention ne se limite pas au mode de réalisation décrit. En variante, un moteur à combustion interne à allumage par compression, fonctionnant par exemple au gazole peut convenir. L'organe de dépollution peut être différent d'un catalyseur trois voies. L'organe de dépollution peut être par exemple un système SCR équipée d'une sonde de mesure NOx, une telle sonde ayant également besoin d'être chauffé à une température de fonctionnement.
L'invention permet d'éviter les casses de ces sondes, de qui améliore la qualité du véhicule.

## Revendications

1.  Procédé de détermination du passage à l'état sans présence d'eau liquide, dit point de rosée, dans une ligne (2) d'échappement de moteur (1) à combustion interne, dans lequel on :

    - Détermine l'énergie calorifique (Ecal) en cours dans la ligne d'échappement (2),
    **caractérisé en ce que** l'on :

       - Détermine le nombre d'arrêt moteur successifs antérieurs sans passage de point de rosée (Narr_ssPdR),
       - Détermine le seuil d'énergie calorifique (Ec) requis corrigé en fonction de ce nombre d'arrêt moteur successifs antérieurs pour être assuré de ne pas avoir d'eau liquide dans la ligne d'échappement (2),
       - Compare l'énergie calorifique (Ecal) actuelle au seuil d'énergie calorifique corrigé (Ec) et on considère que le point de rosée est passé si l'énergie calorifique (Ecal) en cours est supérieure au seuil d'énergie calorifique corrigé (Ec).

2.  Procédé selon la revendication 1, **caractérisé en ce que**, la ligne d'échappement (2) comprenant un organe de dépollution et une sonde (4, 5), l'énergie calorifique (Ecal) en cours dans la ligne d'échappement est définie en intégrant la puissance calorifique (Pcal) apportée dans la ligne d'échappement et déterminée par la relation suivante :

$$Pcal= K.Qéch.Cgaz/paroi. Cp.(Tgps - Tp)$$

    Avec Pcal la puissance calorifique, Tgps la température de paroi de la ligne d'échappement, Tp la température des gaz d'échappement environnant la sonde, Cp la capacité calorifique des gaz d'échappement, Cgaz/paroi un coefficient de pondération prenant en compte les échanges thermiques entre les gaz et la paroi de ligne d'échappement, Qech le débit de gaz d'échappement, K un coefficient de pondération dépendant de l'état de chauffe de l'organe de dépollution et de la température du moteur.

3.  Procédé selon la revendication 1 ou la revendication 2, **caractérisé en ce que** la détermination du seuil d'énergie calorifique corrigé (Ec) comprend :

       - une étape de détermination d'une énergie seuil nominale (Es) requise pour que la ligne d'échappement (2) de contienne pas d'eau liquide, en fonction de la température d'air ambiant (Tair_dém) de la température du moteur (Teau_dém)
       - une étape de détermination, à partir du nombre d'arrêt moteur successifs antérieurs sans passage de point de rosée (Narr_ssPdR), d'un facteur de correction (F) dont le produit avec l'énergie seuil nominale (Es) permet d'obtenir, le seuil d'énergie calorifique corrigé, (Ec).

4.  Procédé selon l'une quelconque des revendications précédentes, **caractérisé en ce que**, le procédé étant mis en œuvre par un calculateur (6), le nombre d'arrêt moteur successifs antérieurs sans passage de point de rosée (Narr_ssPdR) comprend une étape de comptage du nombre d'arrêt moteur successifs antérieurs sans passage de point de rosée (Narr_ssPdR_a) pendant la phase d'éveil en cours du calculateur (6).

5.  Procédé selon la revendication 4, **caractérisé en ce que** la température d'air ambiant (Tair_dém) et la température du moteur (Teau_dém) sont déterminés au début de la phase d'éveil en cours du calculateur (6).

6.  Procédé selon la revendication 4 ou la revendication 5, **caractérisé en ce qu'**il comprend :

    - une étape, à l'arrêt du calculateur (6), d'écriture dans une mémoire non volatile du nombre d'arrêt moteur successifs antérieurs sans passage de point de rosée (Narr_ssPdR),
    - une étape de lecture, au début de la phase d'éveil du calculateur (6), de cette mémoire non volatile,
    - une addition du nombre d'arrêt moteur successifs antérieurs sans passage de point de rosée compté pendant la phase d'éveil du calculateur en cours (Narr_ssPdR_a) à la valeur de cette mémoire non volatile (Narr_ssPdRNVRAM), tant que le point de rosée n'est pas passé.

7.  Procédé selon l'une des revendication 4 à 6, **caractérisé en ce que** le comptage du nombre d'arrêt moteur successifs antérieurs sans passage de point de rosée pendant la phase d'éveil du calculateur en cours (Narr_ssPdR_a) est remis à zéro lorsque le point de rosée est passé.

8.  Calculateur (6), **caractérisé en ce qu'**il comprend les moyens d'acquisition, de traitement par instructions logicielles stockées dans une mémoire ainsi que les moyens de commande requis à mise en œuvre du procédé selon l'une quelconque des revendications précédentes.

9.  Ensemble moteur comprenant un moteur (1) à combustion interne relié à une ligne (2) d'échappement, cette ligne (2) d'échappement comportant un organe de dépollution et une sonde (4,5) ayant besoin d'être chauffé à une température de fonctionnement,, **caractérisé en ce qu'**il comprend un calculateur selon la revendication 8.

10. Véhicule automobile, **caractérisé en ce qu'**il comprend un ensemble moteur selon la revendication 9 pour son déplacement.


**Patentansprüche**

1.  Verfahren zur Bestimmung des Übergangs in den Zustand ohne das Vorhandensein von flüssigem Wasser, Taupunkt genannt, in einer Abgasleitung (2) eines Verbrennungsmotors (1), in dem eines :

    - Bestimmt Wärmeenergie (Ecal) ist in der Abgasleitung (2), in diesem einen gekennzeichnet:

        - Bestimmt die Anzahl der vorherigen aufeinanderfolgenden Motorstopps, ohne den Taupunkt (Narr_ssPdR) zu überschreiten.
        - Bestimmt die Brennenergieschwelle (Ec) erforderlich korrigiert in Funkti on von der Anzahl des Brennkraftmaschinenstopp sukzessiven in der Abgasleitung kein flüssiges Wasser des mit früherem sichergestellt werden (2),
        - Vergleicht die Wärmeenergie (Ecal) in den aktuellen Wärmeenergieschwelle korrigiert (Ec) und unter Berücksichtigung, dass der Taupunkt übergeben wird, so dass die Wärmeenergie (Ecam) Strom größer ist als die korrigierte Wärmeenergieschwelle (Ec).

2.  Verfahren nach Anspruch 1, **dadurch gekennzeichnet**, die Abgasleitung (2) ein emissionsmindernde Element aufweist und eine Sonde (4, 5), die Wärmeenergie (Ecal) läuft in der Abgasleitung definiert, E durch die Heizkraft (Pcal) Integration in die Abgasleitung und versorgt bestimmt durch die folgende Beziehung :

$$Pcal = K.\ Qéch.Cgaz/paroi.\ Cp.\ (Tgps - Tp)$$

Mit Pcal die Heizleistung, Tgps die Wandtemperatur der Abgasleitung, Tp die Temperatur des die Sonde umgebenden Abgases, Cp die Heizleistung des Abgases, Cgaz/paroi einen Gewichtungskoeffizienten unter Berücksichtigung der Wärmeaustausch zwischen den Gasen und der Abgasleitungswand, Qech der Abgasstrom, K ein Gewichtungskoeffizient in Abhängigkeit vom Heizzustand des Verschmutzungssteuergeräts und der Temperatur des Motors.

3.  Verfahren nach Anspruch 1 oder Anspruch 2, **dadurch gekennzeichnet, dass** die Bestimmung der korrigierten Wärmeenergieschwelle (Ec) umfasst:

- ein Schritt zum Bestimmen einer nominalen Schwellenenergie (Es), die erforderlich ist, damit die Abgasleitung (2) kein flüssiges Wasser enthält, in Abhängigkeit von der Umgebungslufttemperatur (Tair_dém) der Motortemperatur (Teau_dém)
- ein Schritt des Bestimmens, aus der Anzahl des aufeinanderfolgenden vorherigen Motors stoppt, ohne die Taupunkttemperatur (Narr_ssPdR) vorbei, ein Korrekturfaktor (F), dessen Produkt mit der nominalen Schwellenenergie (Es) macht es möglich, erhält,
wird die korrigierte kalorische Energieschwelle, (Ec).

4. Verfahren nach einem der vorhergehenden Ansprüche, **dadurch gekennzeichnet, dass** bei dem von einem Computer (6) implementierten Verfahren die Anzahl vorheriger aufeinanderfolgender Motorstopps ohne Taupunktkreuzung (Narr_ssPdR) einen Zählschritt umfasst die Anzahl der vorherigen aufeinanderfolgenden Motorstopps ohne Taupunktdurchgang (Narr_ssPdR_a) während der Erregungsphase des Stroms des Computers (6).

5. Verfahren nach Anspruch 4, **dadurch gekennzeichnet, dass** die Umgebungslufttemperatur (Tair_dém) und die Temperatur des Motors (Teau_dém) zu Beginn der aktuellen Aufweckphase des Computers (6) bestimmt werden.

6. Verfahren nach Anspruch 4 ou Anspruch 5, **dadurch gekennzeichnet, dass** sie umfasst:

- ein Schritt, wenn der Rechner (6) gestoppt wird, von Schreiben in einem nichtflüchtigen Speicher die Anzahl der aufeinanderfolgenden vorherigen Motor stoppt, ohne die Taupunkttemperatur Passing (Narr_ssPdR),
- ein Leseschritt, bei dem Start des Rechners (6) erwachende Phase, dies nicht-flüchtigen Speicher,
- Addition der Anzahl früherer aufeinanderfolgender Motorstopps ohne Überschreiten des während der Aufweckphase des aktuellen Computers (Narr_ssPdR_a) gezählten Taupunkts zum Wert dieses nichtflüchtigen Speichers (Narr_ssPdRNVRAM), solange der Taupunkt n ist nicht passiert.

7. Verfahren nach den einem der Anspruch 4 zu 6, **dadurch gekennzeichnet, dass** das Zählen der Anzahl von vorhergehenden aufeinanderfolgenden Motorstopp ohne Taupunkttemperatur Passage während der Erregung Phasenstrom

- Rechner (Narr_ssPdR_a) zurückgesetzt, wenn das Taupunkt ist vergangen.

8. Computer (6), der **dadurch gekennzeichnet ist, dass** er die Mittel zum Erfassen, Verarbeiten durch in einem Speicher gespeicherte Softwareanweisungen sowie die Steuermittel umfasst, die zum Implementieren des Verfahrens gemäß einem der vorhergehenden Ansprüche erforderlich sind.

9. Motoranordnung, umfassend einen Verbrennungsmotor (1) verbunden mit einer Abgasleitung (2), diese Abgasleitung (2) die eine Abgasreinigungsvorrichtung und eine Sonde (4,5), um zu erwärmende bei einer Betriebstemperatur, **dadurch gekennzeichnet, dass** sie einen Computer nach Anspruch 8 umfasst.

10. Kraftfahrzeug, **dadurch gekennzeichnet, dass** es für seine Bewegung eine Motoranordnung nach Anspruch 9 umfasst.

**Claims**

1. Method for determining the transition to the state without the presence of liquid water, called dew point, in an exhaust line (2) of an internal combustion engine (1), in which one :

- Determines heat energy (Ecal) being in the exhaust line (2), **characterized in that** one :

- Determines the number of previous successive engine stops without passing the dew point (Narr_ssPdR),
- Determines the calorific energy threshold (Ec) required corrected in functi on of the number of engine stop successive previous to be assured of having no liquid water in the exhaust line (2),
- Compares the heat energy (Ecal) in the current corrected heat energy threshold (Ec) and considering that the dew point is passed so the heat energy (Ecal) current is greater than the corrected heat energy threshold (Ec).

2. Method according to claim 1, **characterized in that**, the exhaust line (2) comprising a pollution control member and a probe (4, 5), the heat energy (Ecal) in progress in the exhaust line is defined e by integrating the calorific power (Pcal) supplied to the exhaust line and determined by the following relation :

$$Pcal = K.Qéch.Cgaz/paroi. Cp. (Tgps - Tp)$$

With Pcal the calorific power, Tgps the wall temperature of the exhaust line, Tp the temperature of the exhaust gas surrounding the probe, Cp the calorific capacity of the exhaust gas, Cgaz /paroi a weighting coefficient taking into account the heat exchanges between the gases and the exhaust line wall, Qech the exhaust gas flow, K a weighting coefficient depending on the state of heating of the pollution control unit and the temperature of the engine.

3. Method according to Claim 1 or Claim 2, **characterized in that** the determination of the corrected heat energy threshold (Ec) comprises :

- a step of determining a nominal threshold energy (Es) required for the exhaust line (2) to contain no liquid water, as a function of the ambient air temperature (Tair_dém) of the engine temperature (Teau_dém)
- a step of determining, from the number of previous successive engine stops without passing the dew point (Narr_ssPdR), a correction factor (F) whose product with the nominal threshold energy (Es) makes it possible to obtain, the corrected calorific energy threshold, (Ec).

4. Method according to any one of the preceding claims, **characterized in that**, the method being implemented by a computer (6), the number of previous successive engine stops without dew point crossing (Narr_ssPdR) comprises a counting step the number of previous successive engine stop without dew point passage (Narr_ssPdR_a) during the arousal phase of current of the computer (6).

5. Method according to Claim 4, **characterized in that** the ambient air temperature (Tair_dém) and the temperature of the engine (Teau_dém) are determined at the start of the current wake-up phase of the computer (6).

6. A method according to claim 4 o u to claim 5, **characterized in that** it comprises :

- a step, when the computer (6) is stopped, of writing in a non-volatile memory the number of previous successive engine stops without passing the dew point (Narr_ssPdR),
- a reading step, at the start of the waking up phase of the computer (6), of this non-volatile memory,
- an addition of the number of previous successive engine stops without passing the dew point counted during the wake-up phase of the current computer (Narr_ssPdR_a) to the value of this non-volatile memory (Narr_ssPdRNVRAM), as long as the dew point n has not happened.

7. Method according the one of claim 4 to 6, **characterized in that** the counting of the number of previous successive engine stop without dewpoint passage during the arousal phase current calculator (Narr_ssPdR_a) is reset when the dew point has passed.

8. Computer (6), **characterized in that** it comprises the means of acquisition, processing by software instructions stored in a memory as well as the control means required for implementing the method according to any one of the preceding claims.

9. Engine assembly comprising an internal combustion engine (1) connected to an exhaust line (2), this exhaust line (2) comprising a pollution control device and a probe (4,5) needing to be heated at an operating temperature, **characterized in that** it comprises a computer according to claim 8.

10. Motor vehicle, **characterized in that** it comprises a motor assembly according to claim 9 for its movement.

Figure 1

Figure 2

Figure 3

**EP 3 625 443 B1**

## RÉFÉRENCES CITÉES DANS LA DESCRIPTION

**Documents brevets cités dans la description**

- FR 3034455

- DE 102011084041 A1